Europäisches Patentamt

European Patent Office

Office européen des brevets

(11) Veröffentlichungsnummer: **0 003 991**
**B1**

# (12) EUROPÄISCHE PATENTSCHRIFT

(21) Anmeldenummer: **79100494.8**

(22) Anmeldetag: **20.02.79**

(51) Int. Cl.³: **G 03 B 17/26**, G 03 C 3/00

(54) Verfahren und Vorrichtung zum Wickeln und Kassettieren eines Filmbandes

(30) Priorität: **04.03.78 DE 2809360**

(43) Veröffentlichungstag der Anmeldung:
**19.09.79 Patentblatt 79/19**

(45) Bekanntmachung des Hinweises auf die Patenterteilung:
**26.11.80 Patentblatt 80/24**

(84) Benannte Vertragsstaaten:
**BE CH DE FR GB IT**

(56) Entgegenhaltungen:
DE - A - 2 244 190
FR - A - 2 129 370
FR - A - 2 160 056
GB - A - 1 283 214
US - A - 3 787 954

(73) Patentinhaber: **AGFA-GEVAERT
AKTIENGESELLSCHAFT
Patentabteilung
D - 5090 Leverkusen 1 (DE)**

(72) Erfinder: **Dunkel, Franz-Heinz
Potsdamer Strasse 1
D - 5090 Leverkusen (DE)
Klinkhammer, Ralf L., Dipl.-Ing.
Hans-Schulten Strasse 14
D - 5000 Koeln 91 (DE)
Nebel, Heinz
Schwarza Strasse 2
D - 5090 Leverkusen (DE)
Spanner, Siegfried, Ing.grad.
Ludovici Weg 49
D - 4018 Langenfeld (DE)
Seibel, Gerd
Damaschke-Strasse 68
D - 5090 Leverkusen (DE)**

Courier Press, Leamington Spa, England.

## Verfahren und Vorrichtung zum Wickeln und Kassettieren eines Filmbandes

Die Erfindung betrifft ein Verfahren und eine Vorrichtung zum Ablängen, Wickeln und Kassettieren eines Filmbandes und eines Schutzstreifens mit hoher Taktzahl, wobei das Filmband und der in Längsrichtung versetzte Schutzstreifen auf Aufteilrädern abgelängt, über eine Führung einer Wickelwelle zugeleitet werden, der Schutzstreifen angewickelt, das Filmband in den sich bildenden Rollenzwickel eingeschoben und mitgenommen, das Ende des Schutzstreifens erfaßt und die Rolle mit dem Ende des Schutzstreifens axial in ein seitlich geöffnetes Kassettengehäuse taktsynchron eingeschoben wird.

Bisher wurden Filmrollen auf besonderen Wickelmaschinen aus Schutzstreifen und Filmband gewickelt und gegen Aufspringen mit einer Rollensicherung aus einer Klammer oder einem Klebeband versehen. In einer weiteren Maschine erfolgte kann das Kassettieren durch Einlegen der Rollen in die Kassette unter gleichzeitiger Entfernung der Rollensicherung. Diese Arbeitsweise ist bei größeren Stückzahlen sehr aufwendig, fehlerverursachend und damit kostensteigernd.

In der DE-OS 2 722 654 werden ein Verfahren und eine Vorrichtung zum Konfektionieren von Filmkassetten mit abnehmbaren Deckeln beschrieben, bei welchen die Konfektionierung erfolgt durch einen Aufnahme- oder Arbeitskopf, durch eine drehbare Abstützung zur Förderung des Arbeitskopfes zu einer Mehrzahl von Beschickungs- oder Konfektionierpositionen, durch einen Antrieb für die Abstützung, durch eine beweglich an dem Arbeitskopf gelagerte Kassettenaufnahme, durch eine Einrichtung zur Bewegung der Kassettenaufnahme aus einer ersten Stellung in eine zweite Stellung am Arbeitskopf, durch eine Einrichtung zur Entfernung und zum erneuten Anbringen des Deckels von bzw. an einer Kassette in der Kassettenaufnahme und zur Einführung der Filmrollen bei in der ersten Stellung befindlicher Kassettenaufnahme und durch eine Einrichtung zum Verschweißen oder Versiegeln der Kassettendeckel mit den Kassetten bei in der zweiten Stellung befindlicher Kassettenaufnahme.

Diese Vorrichtung und das Arbeitsverfahren haben den Nachteil, daß durch das Takten die Arbeitsgänge Wickeln und Einschieben in die Kassette hintereinander erfolgen und so nur geringe Taktzahlen erreicht werden können. Durch die Zwichenlagerung der fertigen Rollen in einer Rollenübergabevorrichtung kann es leicht zu Beschädigungen wie Verrutschen der Rolle und folgend Verkratzen des Films oder zu Störungen beim Einschub in die Kassette kommen. Auch sollte das vorstehende Schutzstreifenende eine exakte Länge haben und gegen die Rolle keine Verschiebung erfahren.

Aus der US-PS 3 787 954 ist ein Verfahren und eine Vorrichtung bekannt, in welchen ein Schutzstreifen und eine Filmband zu einer Rolle gewickelt werden, die Rolle in ein Kassettengehäuse eingeschoben und das freie Ende des Schutzstreifens an eine Spule angeschweißt wird.

Zum Wickeln auf der Wickelwelle werden die Schutzstreifen von einer Vorratsrolle und einzelne Filmbänder in einem Kanal zusammengeführt und durch Anpressrollen und mehrere Leiteinrichtungen zur Wickelwelle geführt. Zum Aufwickeln wird der Schutzstreifen in einen Schlitz der Wickelwelle eingeschoben. Die gewickelte Rolle wird, mit einer Halteeinrichtung gegen ein Aufschnurren der Windungen gesichert, in die Kassette überführt und das freie Ende des Schutzstreifens durch Blasluft zum Anschweißen über die Spule in dem Kassettengehäuse gelegt.

Die Vorrichtung zur Durchführung des Verfahrens ist mit einer Vielzahl von Einrichtungen versehen, die zu häufigen Störungen führen können. Das Filmband wird als Einzelstreifen zugeführt und in der Vorrichtung durch Anpreßrollen mit dem Schutzstreifen zur Wickelstation gefördert. Hierdurch entstehen einerseits Ungenauigkeiten in der Zuordnung von Filmband zu Papierschutzstreifen, andererseits aber auch leicht Beschädigungen der empfindlichen Filmoberfläche bei der Berührung mit und der Beschleunigung durch die Anpreßrollen.

Das Einfädeln des Schutzstreifens in den Schlitz der Wickelwelle ist bei nicht ganz planliegenden Schutzstreifen einerseits sehr störungsanfällig, andererseits besteht die Gefahr, daß sich beim Abschieben der Rolle von der Wickelwelle Windungen verschieben und vorstehen und so die Rolle verbreitern, so daß diese breitere Rolle in der Kassette zu Abwickelstörungen führen kann.

Das Anlegen des freien Endes des Schutzstreifens an die Spule mittels Blasluft und das Sichern der gewickelten Rolle mittels einer Halteeinrichtung kann verfahrensbedingt zu Störungen oder zu Beschädigungen führen.

Ein weiterer wesentlicher Nachteil des Verfahrens besteht darin, daß der Schutzstreifen und das Filmband diskontinuierlich gefördert werden müssen, da nach dem Wickelvorgang die Rolle abgeschoben und in das Kassettengehaüse eingelegt und das freie Ende des Schutzstreifens mit der Spule verschweißt werden muß, bevor die Wickeleinrichtung in die Anwickelstellung zurückkehren kann. Außer Störanfälligkeit und der möglichen Beschädigung des Filmbandes wird mit diesem komplizierten Verfahren auch nur geringe Fertigungskapazität erreicht.

In der DE-OS 22 44 190 ist eine Vorrichtung zum Aufwickeln von Bandmaterial beschrieben, wobei die Wickeldorne eine Vielzahl von Bohrungen besitzen, die wechselweise mit einem Unterdruck zum Anwickeln der Bänder in der Wickelstation oder mit Überdruck zum Lösen und Ausstoßen der Rolle von dem Wickeldorn beaufschlagt werden können. Durch die Vielzahl und Art der Bohrungen eignet sich diese Vorrichtung nicht zum Anwickeln von schmalen und somit relativ steifen Bändern auf im Durchmesser kleine Wickelwellen. In der DE-OS wird vorgeschlagen, für steife Papierbänder die Papierlänge so aufzulegen, daß deren überstehende Länge größer ist als der Umfang des Wickeldornes. Hierbei erfolgt ein Umschlagen der innersten Windung, die zwar ein leichteres Abschieben der Rolle ermöglicht, aber für Filmwickel bei der Abwickelung in der Kassette verhakt und beim Abschieben von dem Wickeldorn aus der Rolle vorsteht, so daß in der Kassette Ablaufstörungen entstehen können.

Der Erfindung liegt die Aufgabe zugrunde, bei kontinuierlicher Zuführung von Filmband und Schutzstreifen klebebandfreie Rollen mit hohen Taktzahlen herzustellen und diese unmittelbar danach in schonender Weise ohne Verschiebung und Verformung der Rolle in ein vorher seitlich geöffnetes Kassettengehäuse einzuführen.

Die Aufgabe wird ausgehand von dem eingangs genannten Verfahren erfindungsgemäß dadurch gelöst, daß

a) der Schutzstreifen an seinem Vorderende mit einer Prägung versehen wird
b) der Schutzstreifen mit dem geprägten Vorderende über am Umfang der Wickelwelle mündende Schlitze gebracht, von Unterdruck festgehalten und angewickelt wird.
c) der Schutzstreifen und das von diesem mitgenommene Filmband auf der Wickelwelle unter Spannen einer Feder einer Ringfederkupplung aufgewickelt werden
d) nach Durchschneiden des Filmbandes und des Schutzstreifens der Wickelvorgang durch Entspannen der Feder beschleunigt beendet wird
e) und die gewickelte Rolle durch in die Wickelwelle eingeleitete Preßluft von der Wickelwelle gelöst wird.

Die Lösung der Aufgabe beinhaltet erfindungsgemäß auch eine Vorrichtung zur Durchführung des Verfahrens, die die Merkmale des Oberbegriffs des Anspruchs 2 aufweist und sich dadurch auszeichnet, daß hinter dem Zuführkanal die Wickelwelle mit am Umfang mündenden zu Schlitzen erweiterten Bohrungen, die wechselweise an eine Unterdruck- oder Preßluftleitung anschließbar sind, angeordnet ist, daß die Wickelwelle über eine Ringfederkupplung mit dem Antrieb verbunden ist und daß die Wickelwelle mit einer Bremse und die Abschiebevorrichtung mit einer Klemmgreifzange zum Ergreifen des freien Schutzstreifenendes versehen ist.

Die erheblichen Vorteile des erfindungsgemäßen Verfahrens und der Vorrichtung beruhen einerseits auf einem schnellen exakten Ergreifen des vorgeformten vorderen Schutzstreifenendes durch mehrere mit Unterdruck beaufschlagte Schlitze in der Wickelwelle, durch schonendes Wickeln mittels einer Ringfederkupplung, die es überraschenderweise zusätzlich ermöglicht mit einfachsten Mitteln eine Zeitreserve für das Übergeben des Wickels mit seinem hinteren Schutzstreifenende in die Kassette zu schaffen und so den kontinuierlichen und hierdurch schonenden Zutransport von Filmband und Schutzstreifen zu erlauben. Durch das gesteuerte Anhalten der Wickelwelle mittels einer elektromechanischen Bremse, das gesteuerte etwas spätere Ergreifen des hinteren Schutzstreifenendes und das Einblasen von Preßluft zwischen Rolle und Wickelwelle wird die gewünschte schnelle und exakte Übergabe der Rolle in das Kassettengehäuse erreicht.

In einer zweckmäßigen Ausführungsform ist eine Vorrichtung vorgesehen, die das Vorderende des Schutzstreifens durch eine Prägung so verformt, daß dieses sich an den Umfang der Wickelwelle anpaßt.

Eine weitere Ausführungsform verbessert die Ansaugsicherheit der Wickeleinrichtung indem mindestens zwei zu Schlitzen erweiterte Bohrungen an dem Umfang der Wickelwelle hintereinander angebracht sind, die in ihrer Breite fast der des Schutzstreifens entsprechen.

In einer besonders vorteilhaften Ausführungsform ist die Vorrichtung dadurch gekennzeichnet, daß die Wickelstation eine Aufnahmeeinrichtung für die komplette aus Kassettengehäuse, Kassettendeckel und Spule bestehende Kassette besitzt, die mit einer Einrichtung zum Halten der Spule mit angelegtem Unterdruck versehen ist und daß ein Greiferschwenkhebel zum Abschwenken des Deckels um 90° von dem Kassettengehäuse vor dem Einführen der Rolle und dem Anschweißen des freien Schutzstreifenendes an die Spule und zum Zurückschwenken und Wiederaufsetzen des Deckels auf das Kassettengehäuse nach dem Ladevorgang vorgesehen ist.

Diese vorteilhafte Ausführung gestattet eine besonders schnelle und mechanisch einfache Zuführung der kompletten Kassette zu der Wickelstation, ein taktsynchrones Öffnen der Kassette während des Wickelvorganges, indem der Greiferschwenkhebel den Kassettendeckel um 90° nach oben schwenkt, wobei die Spule mit angelegtem Unterdruck in dem Kassettengehäuse gehalten wird und nach dem Einschieben der gewickelten Rolle und dem Anschweißen des hinteren Schutzstreifenendes an die Spule ein passgenaues Schließen der Kassette durch Zurückschwenken des Kassettendeckels um 90° auf das Kassettengehäuse erreicht wird. Der Abtransport der gewickelten und an der Spule befestigten Rolle kann in der geschlossenen Kassette ohne Beschädigung oder Verschiebung des Wickels mit großer Geschwindigkeit erfolgen.

Diese Konstruktion ist einfach im Aufbau und erfordert bei hoher Geschwindigkeit nur geringe Wartungs- und Reparaturkosten. Durch die exakte schonende Arbeitsweise wird Ausschuß vermieden und wertvolles Material gespart. Die Vorrichtung arbeitet mit den üblichen bekannten Steuerelementen Vollautomatisch und weitgehend störungsfrei.

Ein Ausführungsbeispiel der Erfindung ist in den Zeichnungen dargestellt und wird im folgenden näher beschrieben. Es zeigen:

Figur 1 die Ablängung der Streifen und deren Zuführung zu einer Wickelwelle

Figur 2 einen senkrechten Schnitt durch eine Zuführung und die Wickelwelle

Figur 3 einen waagerechten Schnitt durch die Wickelwelle

Figur 4 die perspektivische Darstellung der Übergabe einer Rolle in die Kassette

Figur 5 eine Ringfederkupplung

Figur 6 eine Ab- und Aufsetzeinheit für den Kassettendeckel

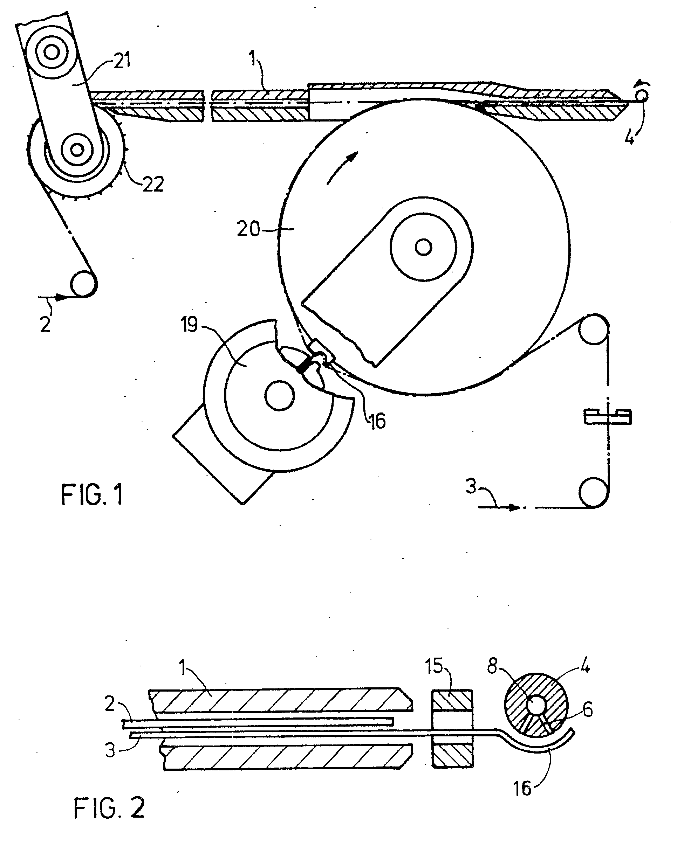

Ein Filmband 2 (Figuren 1 und 2) wird in bekannter Weise von einer Vorratsrolle über Schlaufenspeicher zur Vermeidung von Stillständen bei erforderlichem Wechsel der Vorratsrolle abgezogen und auf ein Aufteilrad 22 aufgeführt. Bei einem perforierten Filmband kann das Aufteilrad 22 mit Perforationszähnen versehen sein. Durch das Aufteilrad 22 wird das Filmband durch einen Zuführkanal 1 zu einer Wickelwelle 4 geschoben und jeweils nach einer Umdrehung des Aufteilrades mittels einer Schneideeinrichtung 21 abgeschnitten. Gleichzeitig wird ein Schutzstreifen 3 mit einer gewünschten Verschiebung in Längsrichtung ebenfalls von Vorratsrollen über Schlaufenspeicher und Kontrolleinrichtungen üblicher Art, wie z.B. Photozellen, zur Einhaltung und Steuerung der Lage des Filmbandes 2 zu der des Schutzstreifens 3 in Längsrichtung einem Aufteilrad 20 zugeführt, erfaßt und in den Zuführkanal 1 unter das Filmband 2 eingeschoben. In Abhängigkeit vom Filmbandtransport wird der Schutzstreifentransportbezüglich der Geschwindigkeit gesteuert und der Schutzstreifen durch die Schneideeinrichtung 19 abgeschnitten. Eine zusätzliche Einrichtung an der Schneideeinrichtung 19 erlaubt den Anfang des nächsten Streifens mit einer Prägung 16 so zu versehen, daß dieser von der Wickelwelle 4 sicher und leicht erfaßt werden kann.

Figur 2 zeigt vergrößert dargestellt den Zuführkanal 1 in welchem der Schutzstreifen 3 und das Filmband 2 wie beschrieben eingeschoben werden. Hierbei hat der Schutzstreifen 3 eine Voreilung und kommt so zuerst mit seiner Einprägung 16 zur Wickelwelle 4. Die Wickelwelle, die innen hohl ist, kann über eine feststehende Ringzuführung 7 auf Preßluft oder Unterdruck umgeschaltet werden. Wird Unterdruck angelegt, so saugt die Wickelwelle 4 über ein, zwei oder mehrere Schlitze 6 den Schutzstreifen 3 an und beginnt diesen aufzuwickeln. Nach einer bestimmten Zeit erreicht das Filmband 2 den von der entstehenden Rolle gebildeten Zwickel, wird erfaßt und mitgewickelt. Der Antrieb 12 der Wickelwelle 4 dreht sich mit konstanter Drehzahl, wobei bei zunehmendem Durchmesser der Rolle und konstanter Drehzahl der Aufteilräder die Umfangsgeschwindigkeit der Rolle größer wird als die Bahngeschwindigkeit mit der die Aufteilräder für das Filmband 22 und den Schutzstreifen 20 die Bänder zuführen. Hierdurch wird eine Feder 10 in einer Ringfederkupplung 9 gespannt.

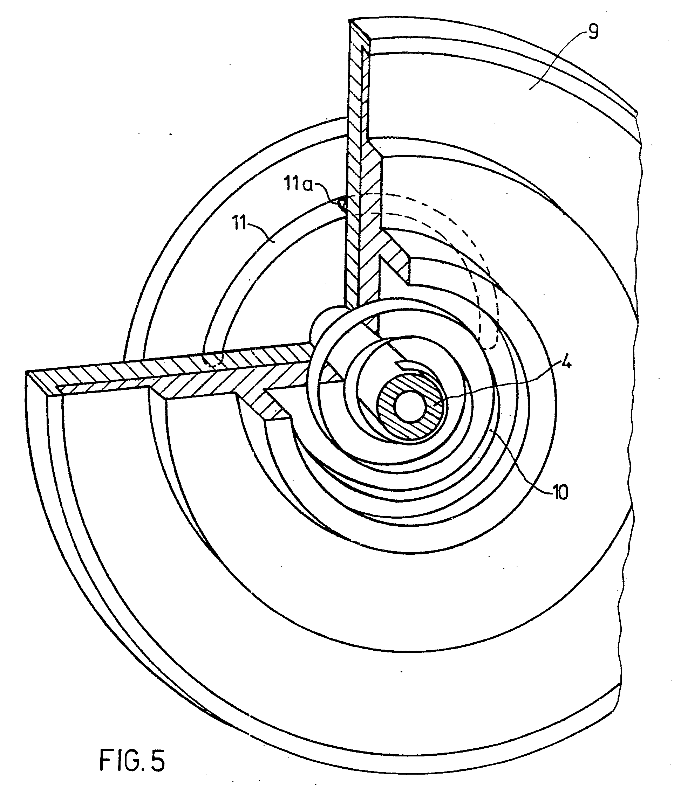

In der Figur 5 ist die Ringfederkupplung 9 dargestellt. Ein Antrieb wirkt auf eine Kupplungsscheibe und über die Feder 10 auf die Wickelwelle 4. Dreht sich der Antrieb schneller als die Wickelwelle, die von dem Schutzstreifen 3 gebremst wird, so wird die Feder 10 gespannt. Nach dem Abschneiden des Schutzstreifens 3 und des Filmbandes 2 wird die in der Feder gespeicherte Energie frei und in eine Beschleunigung des Wickelvorganges umgesetzt. Eine Kurvenscheibe 11 in der ein Bolzen 11a geleitet, begrenzt die Verdrehung der Wickelwelle gegenüber dem Antrieb und sorgt dafür, daß die Wickelwelle 4 beim Wickelbeginn durch die Feder 10 stets in der gleichen Position ist.

Vorteilhafterweise wird die Feder 10 möglichst lang ausgeführtr, so daß in einem gewünschten Bereich von 4—8 gespeicherten Umdrehungen der Wickelwelle 4 keine wesentliche Kraftzunahme erzeugt wird und ein Reißen des Schutzstreifens 3 vermieden wird.

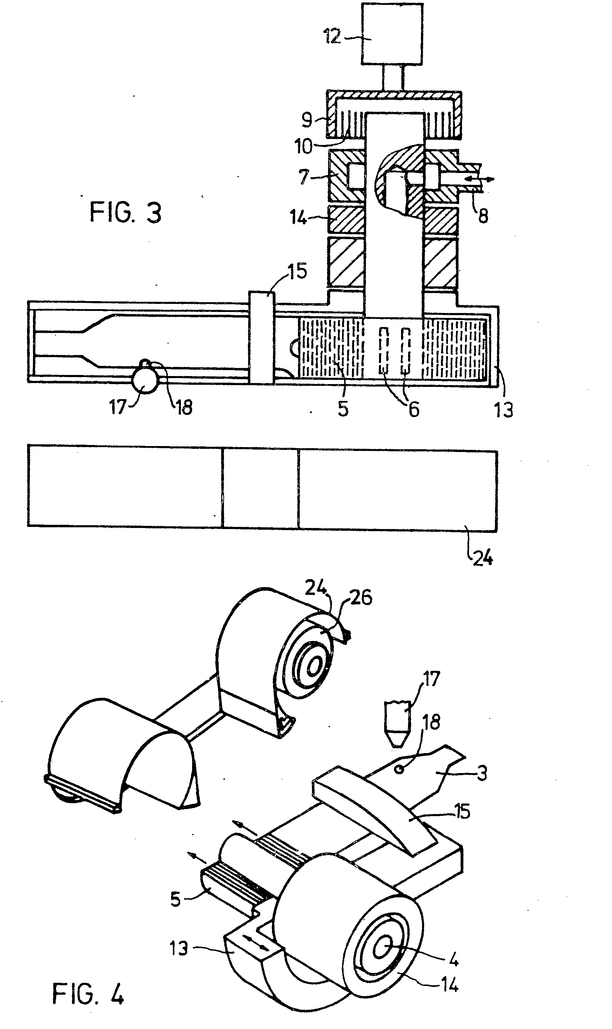

Wie bereits erwähnt, kann nach dem Abschneiden von Filmband 2 und Schutzstreifen 3 auf den Aufteilrädern sich die Feder 10 der Ringfederkupplung 9 entspannen und hierdurch die gespeicherte Energie zur Beschleunigung des Wickelvorganges einsetzen. so entsteht eine Zeitspanne zwischen der Beendigung des Wickelvorganges und der Ankunft der neuen Streifen für den nächsten Wickel. Diese Zeit wird genutzt, um die Wickelstation der Figur 3 für den nächsten Arbeitsgang freizumachen.

Kurz vor Ende des Wickelvorganges schaltet eine Markierung 18 auf dem Filmband 2 oder dem Schutzstreifen 3 über eine Photozelle 17 oder durch andere Abfrageeinrichtungen bekannter Art zuerst eine Bremse 14 für die Wickelwelle 4 etwa eine mechanisch-elektromagnetische Bremse ein, die die Wickelwelle 4 abbremst und veranlaßt dann mit einer geringen Verzögerung eine Klemmgreifzange 15 das Ende des Schutzstreifens 3 zu erfassen. Diese Einrichtung ist so ausgelegt, daß es gelingt, die Rolle 5 und das Schutzstreifenende 3 exakt so zu fassen, wie sie dann in das Kassettengehäuse 24 eingelegt werden müssen.

Bei der Beendigung des Wickelvorganges wird der Unterdruck abgeschaltet und über eine Lietung 8 und eine Zuführung 7 Preßluft in die Wickelwelle 4 eingeblasen. Hierdurch löst sich die Rolle 5 von der Wickelwelle 4. Eine Abschiebevorrichtung 13, an welchem die Klemmgreifzange 15 befestigt ist, bewegt sich von der Wickelstation in Richtung Kassettengehäuse 24, schiebt die Rolle mit dem Ende des Schutzstreifens 3 in die dortige Aufnahme des seitlich geöffneten Kassettengehäuses 24 und gibt zuerst die gewickelte Rolle 5 frei. Die gewickelte Rolle schnurrt auf und deren Windungen legen sich an die Wandungen des Kassettengehäuses 24 an. Dann öffnet sich die Klemmgreifzange 15 und gibt das Schutzstreifenende frei. Die Abschiebevorrichtung kehrt in die Ausgangsposition zurück, so daß die Wickelstation die nächste Rolle fertigen kann, während die gefüllte wieder geschlossene Kasette über eine Kette, einen Drehteller oder dergleichen weiter transportiert und so durch eine leere Kassette für den nächsten Wickel ersetzt werden kann.

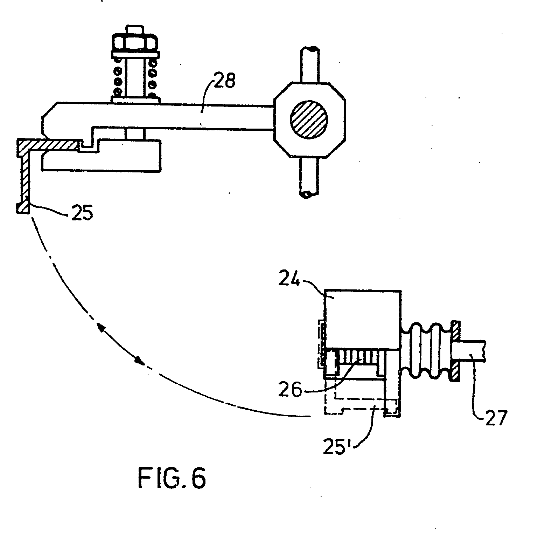

Beim Zutransport der Kassette 23 (Figur 6), die aus Gehäuse 24, Deckel 25 und Spule 26 besteht, wird die Spule 26 mittels Unterdruck 27, welcher durch eine kleine Öffnung im Gehäuse auf die Spule 26 wirkt, gehalten und gleichzeitig wird durch einen Greiferschwenkhebel 28, der über eine nicht geseigte Kurvensteuerung angetrieben wird, der Deckel 25 in einer einfachen mechanischen Bewegung un 90° nach oben geschwenkt. Nach dem oben beschriebenen Laden der Kassette mit der Rolle 5 und dem freien Ende des Schutzstreifens 3 wird das freie Schutzstreifenende an die Spule 26 angeschweißt und dann der Deckel 25 wieder in einer Rückschwenkung des Greiferschwenkhebels 28 auf das Gehäuse 24 aufgesetzt. Die geladene Kassette 23 kann dann durch Kleben oder Verschweißen mit Ultraschall verschlossen und verpackt werden.

Die einzelnen geschilderten Vorgänge laufen mit erheblicher Geschwindigkeit ab, wobei das empfindliche Filmband 2 und der Schutzstreifen 3 kontinuierlich zur Wickelstation gefördert werden. Durch die direkte Übergabe von Rolle 5 und dem hinteren Schutzstreifenende 3 in einer am Ende des Wickelvorganges fixierten Form durch Abschiebevorrichtung 13 und Klemmgreifzange 15 in die Kassette unter Lösung der Verbindung Wickelwelle 4 und Wickel 5 durch Preßluft ist eine schnelle und schonende Einführung der Rolle in die seitlich geöffnete Kassette ohne Verformung oder Verschiebung der Rolle möglich.

**Patentansprüche**

1. Verfahren zum Ablängen, Wickeln und Kassettieren eines Filmbandes und eines Schutzstreifens, bei welchem das Filmband zusammen mit dem in Längsrichtung versetzten Schutzstreifen auf Aufteilrädern abgelängt und über eine Führung einer mit Unterdruck oder Pressluft beaufschlagbaren Wickelwelle zugeleitet, der Schutzstreifen angewickelt, das Filmband in den sich bildenden Rollenwickel eingeschoben und mitgenommen, das Ende des Schutzstreifens erfaßt und die Rolle mit dem Ende des Schutzstreifens axial in ein seitlich geöffnetes Kassettengehäuse taktsynchron eingeschoben wird, dadurch gekennzeichnet, daß

a) der Schutzstreifen (3) an seinem Vorderende mit einer Prägung (16) versehen wird

b) der Schutzstreifen (3) mit dem geprägten Vorderende über am Umfang der Wickelwelle (4) mündende Schlitze (6) gebracht, von Unterdruck festgehalten und angewickelt wird

c) der Schutzstreifen (3) und das von diesem mitgenommene Filmband (2) auf der Wickelwelle (4) unter Spannen einer Feder (10) einer Ringfederkupplung (9) aufgewickelt werden

d) nach Durchschneiden des Filmbandes (2) und des Schutzstreifens (3) der Wickelvorgang durch Entspannen der Feder (10) beschleunigt beendet wird

e) und die gewickelte Rolle (5) durch in die Wickelwelle (4) eingeleitete Preßluft von der Wickelwelle gelöst wird.

2. Vorrichtung zur Durchführung des Verfahrens gemäß Anspruch 1, bestehend aus Aufteilrädern für Filmband und Schutzstreifen, einem Zuführkanal, einer Wickelstation mit Wickelwelle und Antrieb und einer Abschiebevorrichtung, dadurch gekennzeichnet, daß hinter dem Zuführkanal (1) die Wickelwelle (4) mit am Umfang mündenden zu Schlitzen erweiterten Bohrungen (6), die wechselweise an eine Unterdruck- oder Preßluftleitung (8) anschließbar sind, angeordnet ist, daß die Wickelwelle (4) über eine Ringfederkupplung (9) mit dem Antrieb (12) verbunden ist und daß die Wickelwelle (4) mit einer Bremse (14) und die Abschiebevorrichtung (13) mit einer Klemmgreifzange (15) zur Ergreifung des freien Schutzstreifenendes versehen ist.

3. Vorrichtung nach Anspruch 2, gekennzeichnet durch eine Vorrichtung die das Vorderende des Schutzstreifens (3) durch eine Prägung (16) so verformt, daß dieses sich an den Umfang der Wickelwelle (4) anpaßt.

4. Vorrichtung nach Anspruch 2, dadurch gekennzeichnet, daß mehrere zu Schlitzen erweiterten Bohrungen (6) an dem Umfang der Wickelwelle (4) hintereinander angebracht sind, die in ihrer Breite fast der des Schutzstreifens (3) entsprechen.

5. Vorrichtung nach Anspruch 2, dadurch gekennzeichnet, daß die Wickelstation eine Aufnahmeeinrichtung für eine komplette Kassette bestehend aus Kassettengehäuse (24), Kassettendeckel (25) und Spule (26) besitzt, die mit einer Einrichtung (27) zum Halten der Spule (26) mit angelegtem Unterdruck versehen ist, und daß ein Greiferschwenkhebel (28) zum Abschwenken des Deckels (25) un 90° von dem Kassettengehäuse (24) vor dem Einführen der Rolle (5) und dem Anschweißen des freien Schutzstreifenendes an die Spule (26) und zum Zurückschwenken und Wiederaufsetzen des Deckels (25) auf das Kassettengehäuse (24) nach dem Ladevorgang vorgesehen ist.

**Revendications**

1. Procédé pour le découpage à longueur, le bobinage et la mise en cassette d'une bande de pellicule et d'une bande de protection, procédé dans lequel la bande de pellicule est coupée à longueur sur des roues de distribution conjointement avec la bande de protection placée dans le sens longitudinal, pour être ensuite amenée, par un élément de guidage, à un arbre de bobinage pouvant être sollicité par une dépression ou par de l'air comprimé, la bande de protection étant ensuite boninée alors que la bande de pellicule est introduite et entraînée dans la coin de rouleau qui se forme, l'extrémité de cette bande de protection étant ensuite saisie et le rouleau étant introduit axialement en synchronisme avec l'extrémité de la bande de protection dans un logement de cassette ouvert latéralement, caractérisé en ce que:

a) la bande de protection (3) comporte, à son extrémité avant, une empreinte (16);

b) la bande de protection (3) dont l'extrémité avant comporte une empreinte, est amenée sur des fentes (6) débouchant à la périphérie de l'arbre de bobinage (4), elle est maintenue par dépression, puis elle est bobinée;

c) la bande de protection (3) et la bande de pellicule (2) entraînée par celle-ci sont bobinées sur l'arbre de bobinage (4) sous la tension d'un ressort (10) faisant partie d'un accouplement à anneau-ressort (9);

d) après le découpage de la bande de pellicule (2) et de la bande de protection (3), l'achèvement du processus de bobinage est accéléré par la détente du ressort (10), et

e) le rouleau bobiné (5) est détaché de l'arbre de bobinage (4) au moyen d'air comprimé introduit dans ce dernier.

2. Dispositif pour la réalisation du procédé suivant la revendication 1, ce dispositif comprenant des roues de distrbution pour une bande de pellicule et une bande de protection, un canal d'alimentation, un poste de bobinage avec un arbre de bobinage et une commande, ainsi qu'un dispositif d'extraction, caractérisé en ce que, derrière le canal d'alimentation (1), est disposé l'arbre de bobinage (4) comportant des perforations (6) s'élargissant en fentes et débouchant sur la périphérie de cet arbre, ces perforations pouvant être reliées alternativement à une conduite à dépression ou à air comprimé (8), cet arbre de bobinage (4) étant relié à la commande (12) par l'intermédiaire d'un accouplement à anneau-ressort (9), cet arbre (4) étant également muni d'un frein (14), tandis que le dispositif d'extraction (13) est pourvu d'une pince (15) destinée à accrocher l'extrémité libre de la bande de protection.

3. Dispositif suivant la revendication 2, caractérisé en ce qu'il comprend un dispositif façonnant l'extrémité avant de la bande de protection (3) par une empreinte (16), de telle sorte que cette extrémité vienne s'adapter sur la périphérie de l'arbre de bobinage (4).

4. Dispositif suivant la revendication 2, caractérisé en ce qu'on pratique plusieurs perforations (6) s'élargissant en fentes et se succédant sur la périphérie de l'arbre de bobinage (4), la largeur de ces perforations correspondant à peu près à celle de la bande de protection (3).

5. Dispositif suivant la revendication 2, caractérisé en ce que le poste de bobinage comporte un dispositif récepteur pour une cassette complète constituée de son logement (24), de son couvercle (25) et d'une bobine (26), cette cassette comportant un dispositif (27) destiné à maintenir la bobine (26) avec la dépression appliquée, tandis que l'on prévoit également un levier pivotant de préhension (28) destiné à faire pivoter le couvercle (25) sur 90° à l'écart du logement (24) de la cassette avant l'introduction du rouleau (5) et avant le soudage de l'éxtrémité libre de la bande de protection sur la bobine (26), ce levier étant également prévu pour faire à nouveau pivoter le couvercle (25) pour le replacer sur le logement (24) de la cassette après le processus de chargement.

**Claims**

1. A method of cutting a strip of film and a protective tape to length, winding them and inserting them into a cassette, wherein the strip of film together with the protective tape, which is offset in the longitudinal direction, are cut to length on distribution wheels and are fed via a guide means to a spindle to which either a vacuum or compressed air can be applied, the protective tape is commenced to be wound on the spindle, the strip of folm is pushed into the roll wedge which forms and is entrained, the end of the protective tape is grasped and the roll with the end of the protective tape is pushed, in accordance with a given timing, axially into a cassette housing, which is open on one side, characterised in that

a) the protective tape (3) is provided with a deformation (16) at its initial end ·

b) the protective tape (3) with the deformed initial end is led over slits (6) opening on to the circumference of the spindle (4), is gripped by a vacuum and is commenced to be wound on the spindle

c) the protective tape (3) and the strip of film (2) carried along by it are wound on to the spindle (4), under the tension of the spring (10) of an annular spring coupling (9)

d) after the strip of film (2) and the protective tape (3) have been cut through, the winding process is ended at a higher speed by the release of the spring (10)

e) and the wound roll (5) is released from the spindle by compressed air introduced into the spindle (4).

2. An apparatus for carrying out the method according to Claim 1, comprising distribution wheels for the strip of film and protective tape, a feed duct, a winding unit with a spindle and drive mechanism and a pusher device, characterised in that the spindle (4) with holes (6) which widen to slits and open at the circumference and which can be connected selectively to a vacuum line or compressed air line (8) is arranged downstream of the feed duct (1), the spindle (4) is connected via an annular spring coupling (9) to the drive mechanism (12) and the spindle (4) is provided with a brake (14) and the pusher plate (13) is provided with a clamp (15) for gripping the free end of the protective tape.

3. An apparatus according to Claim 2, characterised by a device which shapes the initial end of the protective tape (3) with a deformation (16) in such a way that it is adapted to the circumference of the spindle (4).

4. An apparatus according to Claim 2, characterised in that several holes (6) widened to form slits are arranged in succession on the circumference of the spindle (4) which almost correspond in width to that of the protective tape (3).

5. An apparatus according to Claim 2, characterised in that the winding unit has a take up device for a complete cassette consisting of a cassette housing (24), cassette cover (25) and core (26), which device is provided with an arrangement (27) for holding the core (26) by application of a vacuum and that a gripper (28) is provided for pivoting the cover (25) by 90° away from the cassette housing (24) prior to introduction of the roll (5) and welding the free end of the protective tape to the core (26) and for pivoting back the cover (25) and replacing it on to the cassette housing (24) after loading is complete.

FIG. 1

FIG. 2

0 003 991

FIG. 3

FIG. 4

FIG. 5

FIG. 6